# EUROPEAN PATENT SPECIFICATION

(11) **EP 1 471 081 B1**
(45) Date of publication and mention of the grant of the patent: **25.07.2007**
(21) Application number: 03703073.1
(22) Date of filing: 29.01.2003
(51) Int. Cl.: C08F 8/48, C08F 8/04, C08L 15/00, C09D 5/03

(54) **ORGANIC PARTICLES AND POWDER COATING MATERIAL**
ORGANISCHE TEILCHEN UND PULVERBESCHICHTUNGSMASSE
PARTICULES ORGANIQUES ET MATERIAU DE REVETEMENT EN POUDRE

(30) Priority: 01.02.2002 JP 2002025710; 16.01.2003 JP 2003008870
(43) Date of publication of application: 27.10.2004
(73) Proprietor: ZEON CORPORATION, Tokyo 100-8246 (JP)
(72) Inventor: KITAHARA, Shizuo, c/o ZEON CORPORATION, Tokyo 100-8246 (JP)
(74) Representative: Albrecht, Thomas
(86) International application number: PCT/JP2003/000840
(87) International publication number: WO 2003/064481

(56) References cited:
- EP-A- 0 061 223
- EP-A- 0 110 356
- EP-A1- 0 110 356
- JP-A- 58 015 504
- JP-A- 61 026 602
- US-A- 3 205 093
- US-A- 3 274 148
- US-A- 4 678 841
- DATABASE WPI Section Ch, Week 197611 Derwent Publications Ltd., London, GB; Class A12, AN 1976-19953x XP002325314 & JP 51 012892 A (SUMITOMO CHEM. CO., LTD.) 31 January 1976 (1976-01-31)

## Description

### TECHNICAL FIELD

The present invention relates to organic particles and powder paint, and more specifically, to organic particles suitable for producing powder paint which provides coating being excellent in water-resisting property and both adhesion and glossiness, as well as powder paint using the organic particles.

### BACKGROUND ART

Powder paint is a paint which does not contain a volatile component such as an organic solvent and of which coating is formed by applying, by coating, only a coating-formation component to an object to be coated and then melting the applied coating-formation component. Powder paint has advantages, as compared with the conventional solvent-type paint, in that 1) a relatively thick coating layer can be formed by one coating process; 2) powder which has failed to attach to the object can be retrieved for reuse; and 3) the amount of paint which is wasted during the coating process is relatively small. Thus, in order to rationalize a painting process and adapt the process to a more environment-friendly one, powder paint is now widely used in various fields of industrial products such as automobile parts, vehicles, electric appliances and the like.

As such powder paint described above, there have conventionally been used epoxy based, vinyl chloride based, polyolefin based, acrylic, and.polyester based powder paint. The powder paint of these types is used for coating of various objects. For example, epoxy based powder paint, which is excellent in adhesion and inexpensive, is used for a valve, a pipe and parts of electric appliances. Polyester based powder paint is used for a washing machine and a tire wheel. Acrylic powder paint, which is excellent in weatherproof, glossiness and soilproof, is used for an exterior item such as a gate, a fence and a cloth-drying platform. Polyolefin based powder paint is used for a bicycle and a metal cage.

The conventional powder paint are generally poor in water-resisting property, and none of them are excellent in both adhesion and glossiness. Due to this, not powder paint, but solvent-type paint has conventionally been used for protective coating of a ship base, crrosionproof coating, waterproof coating and soilproof coating. Solvent-type paint, which uses an organic solvent, cannot be retrieved for reuse because the organic solvent in the paint volatilizes after being coated. Further, such an organic solvent increases risks of fire, poisoning, air pollution during the coating process.

Therefore, a material which can be used for producing powder paint which provides coating excellent in water-resisting property and both in adhesion and glossiness has been in demand.

### DISCLOSURE OF INVENTION

An object of the present invention is to provide organic particles suitable for producing powder paint which provides coating excellent in water-resisting property and both in adhesion and glossiness, and powder paint using the organic particles.

As a result of a study for achieving the above-described obj ect, the present inventors have discovered that use of organic particles which contain conjugated diene polymer cyclized product by a specific content and whose mean particle diameter is in a specific range for powder paint results in coating which is excellent in water-resisting property and both in adhesion and glossiness, thereby completing the present invention on the basis of the discovery.

Thus, according to the present invention, there are provided organic particles whose mean particle diameter is in a range of 1 to 200 µm and which contain no less than 20% by weight of conjugated diene polymer cyclized product.

Further, according to the present invention, there is provided powder paint which includes the organic particles, the organic particles containing a coloring agent.

### BEST MODE FOR CARRYING OUT THE INVENTION

Hereinafter, the present invention will be described in detail.

The organic particles of the present invention have mean particle diameter in a range of 1 to 200 µm and contain no less than 20% by weight of a conj ugated diene polymer cyclized product. The mean particle diameter of the organic particles is preferably in a range of 3 to 100 µm, and more preferably in a range of 5 to 60 µm. When the particle diameter is too small, the fluidity of the paint as powder is deteriorated and cannot be used as powder paint. On the other hand, when the particle diameter is too large, glossiness of the resulting coating is poor. In the present invention, the mean particle diameter represents a particle diameter corresponding to the 50% number reference integrated value in the number reference integrated curve plotted with respect to the particle diameter and measured by the laser diffraction-scattering method.

The shapes of the organic particles are not particularly restricted and may be spherical, ellipsoidal or amorphous.

The content of the conjugated diene polymer cyclized product in the organic particles of the present invention is preferably no less than 20% by weight, more preferably no less than 30% by weight, and most preferably no less than 40% by weight. When the content of the conjugated diene polymer cyclized product is too small, the powder paint is less likely to melt and may fail to form even coating.

The conjugated diene polymer cyclized product used in the present invention is a polymer obtained by effecting an internal cyclization reaction of a conjugated diene polymer. The conjugated diene polymer may be either a natural product, that is, natural rubber, or a synthesized product obtained by polymerizing conjugated diene monomers.

Examples of the conjugated diene monomer include 1,3-butadiene, isoprene, 2,3-dimethyl-1,3-butadiene, 2-phenyl-1, 3-butadiene, 1,3-pentadiene, 2-methyl-1,3-pentadiene, 1,3-hexadiene, 4,5-diethyl-1,3-octadiene, 3-butyl-1,3-octadiene, and chloroprene. Among these examples, 1,3-butadiene and isoprene are preferable.

The conjugated diene polymer may be a copolymer of a conjugated diene monomer and a monomer of different type which can be copolymerized with the conjugated diene monomer, unless the copolymerization of the monomer of different type substantially disturbs the effect of the present invention. Examples of the monomer which can be polymerized with the conjugated diene monomer include: an aromatic vinyl compound such as styrene, α-methylstyrene, p-isopropylstyrene, p-phenylstyrene, p-methoxystyrene, p-methoxymethylstyrene, p-tert-butoxystyrene, chloromethylstyrene, 2-fluorostyrene, 3-fluorostyrene, pentafluorostyrene, vinyltoluene, vinylnaphthalene and vinylanthracene; an olefinic compound such as ethylene, propylene and isobubyrene; ethylenic unsaturated nitryl compound such as acrylonitril and methacrylonitril; ethylenic unsaturated carboxylic acid such as acrylic acid, methacrylic acid, maleic acid and itaconic acid; an ester of the aforementioned ethylenic unsaturated carboxylic acid such as methyl acrylate, ethyl acrylate, 2-ethylhexyl acrylate, butyl acrylate and methyl methacrylate; acryl amide and methacryl amide; and vinyl chloride, vinylidene chloride, N-vinylpyrolidone and vinyl acetate. Among these examples, an aromatic vinyl compound is preferable and styrene α-methylstyrene is especially preferable.

The content of the conjugated diene monomer unit in the conjugated diene polymer is preferably no less than 40 mol%, more preferably no less than 60 mol%, and most preferably no less than 80 mol%.

The number average molecular weight of the conjugated diene polymer, in terms of a polystyrene equivalent molecular weight measured by gel permeation chromatography, is preferably 10, 000 to 300, 000, more preferably 20, 000 to 150, 000, and most preferably 60,000 to 130,000. If the number average molecular weight is too small, the strength of coating may be decreased. If the number average molecular weight is too large, fluidity of the powder paint may be deteriorated.

The manner of bonding of the conjugated diene monomer unit of the conjugated diene polymer, that is, the respective proportions of trans-1,4-configuration, cis-1,4-configuration, 1,2-configuration or 3,4-configuration, are not particularly restricted.

The conjugated diene polymer cyclized product used in the present invention can be easily obtained by effecting an internal cyclization reaction of a conjugated diene polymer in the presence of a cyclization catalyst.

Examples of the cyclization catalyst include: sulfuric acid; an organic sulfonic acid compound such as alkylbenzenesulfonic acid like fluoromethanesulfonic acid, difluoromethanesulfonic acid and p-toluenesulfonic acid, an anhydride thereof and an esterified product thereof; and a metal halide such as boron trifluoride, boron trichloride, tin tetrachloride, aluminum chloride, diethylaluminum monochloride, aluminum bromide, antimony pentachloride, tungsten hexachloride, and iron chloride.

An internal cyclization reaction can be effected, for example, by bringing the above-described cyclization catalyst into contact with conjugated diene polymer in an inactive solvent.

As the inactive solvent, a hydrocarbon-type solvent of which boiling point is 70°C or higher is preferably used. Specific examples of the hydrocarbon-type solvent include: aromatic hydrocarbon such as benzene, toluene, xylene and ethylbenzene; saturated aliphatic hydrocarbon such as pentane, hexane, heptane and octane; and alicyclic hydrocarbon such as cyclopentane, cyclohexane, cycloheptane and cyclooctane.

As the inactive solvent, the same solvent as is used in the polymerization reaction of the conjugated diene polymer can be used. For example, an internal cyclization reaction of the conjugated diene polymer can be effected by adding, after the polymerization reaction is completed, the cyclization catalyst to the solution of polymerization reaction.

The conditions of the internal cyclization reaction are not particularly restricted. The reaction temperature is generally in a range of 20 to 200°C, and preferably in a range of 50 to 150°C. The reaction time is generally in a range of 1 to 20 hours, and preferably in a range of 2 to 15 hours.

The cyclization rate of the conjugated diene polymer cyclized product is preferably in a range of 30 to 95%, more preferably in a range of 50 to 93%, and most preferably in a range of 60 to 90%. When the cyclization rate is within these ranges, the balance among the storage properties of the powder paint such as blocking resistance, and the coating characteristics thereof such as adhesion, water-resisting property and glossiness, is improved.

The cyclization rate of the conjugated diene polymer cyclized product is expressed as percent of the difference in the amount of unsaturated bonding between the conjugated diene polymer before cyclization and the conjugated diene polymer after the cyclization, with respect to the amount of unsaturated bonding in the conjugated diene polymer before the cyclization. The amount of unsaturated bonding can be measured by proton NMR.

Specifically, the cyclization rate is obtained, for example, by: measuring a peak area A derived from the unsaturated bonding in the conjugated diene polymer before cyclization and a peak area B derived from the unsaturated bonding in the cyclized product of the conjugated diene polymer; and carrying out a calculation according to the calculation formula: (A - B)/A × 100.

In the present invention, the conjugated diene polymer cyclized product may further be subjected to acid modification (hereinafter, the acid-modified cyclized product of the conjugated diene polymer will occasionally be referred to as an "acid-modified cyclized product").

The method of acid-modifying the conjugated diene polymer cyclized product is not particularly restricted. Examples thereof include a method of bringing the conjugated diene polymer cyclized product into contact with an acid such as carboxylic acid compound in the presence of a radical generating agent.

As the acid used for acid-modification, a carboxylic acid compound is preferable. Examples of the carboxylic acid compound include: monoolefinic carboxylic acid such as acrylic acid and methacrylic acid; monoolefinic dicarboxylic acid such as maleic acid, fumaric acid, itaconic acid; monoester of momoolefinic carboxylic acid such as ethyl acrylate, butyl methacrylate and hydroxylethyl acrylate; an anhydride such as maleic anhydride, itaconic anhydride and aconitic anhydride; and maleic acid monomethyl ester, fumaric acid monoethyl ester. Among these examples, monoolefinic dicarboxylic acid and anhydride thereof are preferable.

Examples of the radical generating agent used for acid modification include: peroxide such as di-tert-butylperoxide, tert-butylhydroperoxide, dicumylperoxide, benzoylperoxide, tert-butylperoxide benzoate, methylethylketone peroxide, di-tert-butyl diperphthalate; azonitrile such as azo bis isobutylnitrile. The conditions of the modification reaction are not particularly restricted. Accordingly, the reaction temperature and the reaction time may be changed in an appropriate manner.

The content of the portion of the conjugated diene polymer cyclized product, which portion has been acid-modified by the carboxylic acid compound, is generally in a range of 0.1 to 10% by weight, preferably in a range of 0.2 to 5% by weight, and most preferably in a range of 0.3 to 3% by weight. Acid-modification of the conjugated diene polymer cyclized product improves adhesion of coating to a base material such as metal.

Further, in the present invention, the conjugated diene polymer cyclized product may further be subjected to hydrogenation (hereinafter, such a hydrogenated cyclized product of the conjugated diene polymer will occasionally be referred to as a "hydrogenated conjugated diene polymer cyclized product").

The method of hydrogenating the conjugated diene polymer cyclized product is not particularly restricted. Examples thereof include a method of bringing the conjugated diene polymer cyclized product into contact with hydrogen in the presence of a known catalyst which is capable of hydrogenating an unsaturated bond.

Examples of the catalyst for hydrogenation include: a heterogeneous catalyst like a catalyst comprised of a simple substance of metal such as nickel, palladium, platinum or a supported metal catalyst in which the aforementioned simple substance of metal is supported on a support; and a homogeneous catalyst comprised of a compound containing a metal selected from those belonging to the group VIII of the periodic table. Examples of the support used for the supported metal catalyst include carbon, silica, diatomaceous earth, alumina, titanium oxide and zeolite.

The reaction conditions of the hydrogenation reaction may be changed in accordance with the type of the catalyst. The hydrogenation is carried out, in general, under hydrogen pressure of 1 to 150 atm and at a reaction temperature in a range of 0 to 200°C (preferably in a range of 20 to 150°C). The hydrogenation rate of the hydrogenated conjugated diene polymer cyclized product may be changed in accordance with the application. The iodine number of the hydrogenated conjugated diene polymer cyclized product is not particularly restricted. In terms of weatherproof, the iodine number is preferably no higher than 200. The hydrogenated conjugated diene polymer cyclized product may further be subjected to the above-described acid modification.

The number average molecular weight of the conjugated diene polymer cyclized product used in the present invention is preferably in a range of 5,000 to 100,000, more preferably in a range of 10,000 to 75,000, and most preferably in a range of 30,000 to 65,000. When the number average molecular weight is within these ranges, the balance of adhesion and glossiness is improved. The number average molecular weight of the conjugated diene polymer cyclized product is the standard polystyrene equivalent molecular weight measured by gel permeation chromatography.

The glass transition temperature of the conjugated diene polymer cyclized product is preferably no lower than 50°C, and more preferably in a range of 55 to 85°C. When the glass transition temperature is within the aforementioned range, the balance of blocking resistance and strength of coating is improved.

As the conjugated diene polymer cyclized product used in the present invention, those of which cyclization rate is in a range of 35 to 95%, number average molecular weight is in a range of 5,000 to 100,000 and glass transition temperature is no lower than 50°C is preferable. By using such a conjugated diene polymer cyclized product, organic particles suitable for production of powder paint having improvedbalance of the physical properties can be obtained.

The softening point of the conjugated diene polymer cyclized product is preferably in a range of 70 to 100°C, in terms of enhancing storage stability.

The pour point of the conjugated diene polymer cyclized product is preferably in a range of 95 to 150°C. When the pour point is within the aforementioned range, the balance of smoothness and glossiness of the coating is excellent.

The difference between the pour point and the softening point in the conjugated diene polymer cyclized product is preferably in a range of 20 to 60°C, in order to achieve excellent coating properties at a low temperature and smoothness of the coating.

The pour-stop point (temperature) of the conjugated diene polymer cyclized product is preferably in a range of 140 to 200°C.

The difference between the pour-stop point and the pour point of the conjugated diene polymer cyclized product is preferably in a range of 30 to 50°C, in order to achieve excellent coating properties at a low temperature.

By making the organic particles of the present invention contain a coloring agent, the organic particles can suitably be used as powder paint.

As the coloring agent, the pigments and dyes which are commonly used can be used. In terms of achieving good spectral transmission properties, dyes are preferable.

Preferable examples of the pigment include: yellow pigment such as benzidine based pigment, azo based pigment and isoindoline based pigment; magenta pigment such as azo lake based pigment, rhodamine lake based pigment, quinacridone based pigment, naphthol based pigment and diketopyrolopyrrole based pigment; and cyan pigment such as phthalocyanine based pigment, indanthrene based pigment. As black pigment, carbon black is generally used. Examples of carbon black include thermal black, acetylene black, channel black, furnace black and lamp black.

Preferable examples of the dye include: yellow dye such as azo based dye, nitro based dye, quinoline based dye, quinophthalon based dye and methine based dye; magenta dye such as anthraquinone based dye, azo based dye and xantene base dye; and cyan dye such as anthraquinone based dye, phthalocyanine based dye and indoaniline based dye.

The amount of the coloring agent to be used may be selected in accordance with the required tint and color concentration, and is preferably in a range of 0.1 to 50 parts by weight, and more preferably 1 to 20 parts by weight, with respect to 100 parts by weight of the conjugated diene polymer cyclized product.

The organic particles of the present invention may contain additives such as anti-oxidant, filler, wax, softener, hardener, UV absorber, UV stabilizer, flame retardant, anti-popping agent, surface control agent and charge control agent, unless addition of such additives substantially inhibits the effect of the present invention.

Examples of the anti-oxidant include: sulfur based ant-oxidant; trimethyldihydroquinone based anti-oxidant such as poly-(2,2,4-trimethyl-1,2-dihydroquinone); amine based anti-oxidant such as N-phenyl-N'-isopropyl-p-phenylenediamine; phenol based anti-oxidant such as 2,2'-methylene bis(4-ethyl-6-t-butylphenol), triethyleneglycol-bis(3-(3-t-butyl-5-methylhydroxyphenyl) propionate), 1, 6-hexanediol-bis(3-(3,5-di-t-butyl-4-hydroxypheyl) propionate), 2,4-bis-(n-octylthio)-6-(4-hydroxy-3,5-di-t-butylanilino)-1 ,3,5-triazine, pentaerythrytyl-tetrakis(3-(3,5-di-t-butyl-4-hydroxyphenyl) propionate) and 2,2-thio-diethylene bis(3-(3,5-di-t-butyl-4-hydroxyphenyl) propionate); phosphorus based anti-oxidant such as tris(2,4-di-t-butylphenyl) phosphite, tris(tridecyl) phosphite, phenyl diisooctyl phosphite, diphenyl tridecyl phosphite, tris(nonylphenyl) phosphite, and tetrakis(2,4-di-t-butylphenyl)-4,4'-biphenylene diphosphite; thioether based anti-oxidant. Among these examples, the phenol based anti-oxidant and the phosphorus based anti-oxidant are preferable, and the phenol based anti-oxidant is more preferable.

The amount of the anti-oxidant to be used is generally in a range of 0.1 to 10 parts by weight, and preferably in a range of 0.5 to 7 parts by weight, with respect to 100 parts by weight of the conjugated diene polymer cyclized product, in order to prevent coloring and gelation.

Examples of the filler include clay, silica, calcium carbonate, magnesium silicate, silica and titanium oxide. Titanium oxide is particularly preferable, in terms of concealing properties.

The amount of the filler to be used is generally in a range of 10 to 150 parts by weight, and preferably in a range of 20 to 100 parts by weight, with respect to 100 parts by weight of the conjugated diene polymer cyclized product.

Examples of the UV absorber include: benzotriazole based UV absorber such as 2- (5-methyl-2-hydroxyphenyl) benzotriazole, 2-(2-hydroxy-3,5-bis(α, α-dimethylbenzyl) phenyl)-2H-benzotriazole, 2-(3,5-di-t-butyl-2-hydroxyphenyl) benzotriazole, 2-(3-t-butyl-5-methyl-2-hydroxyphenyl)-5-chlorobenzotriazol e, 2-(3,5-di-t-butyl-2-hydroxypnenyl)-5-chlorobenzotriazole, 2-(3,5-di-t-amyl-2-hydroxyphenyl) benzotriazole, 2-(2'-hydroxy-5'-t-octylphenyl) benzotriazle, methyl-3-(3-t-butyl-5-(2H-benzotriazole2-yl)-4-hydroxypheny 1) propionate-1·polyethyleneglycol condensate, and hydroxyphenylbenzotriazole derivative; benzophenone based UV absorber such as 2,4-dihydroxybenzophenone, 2-hydroxy-4-methoxybenzophenone-5-sulfoxide, 2-hydroxy-4-methoxybenzophenone, 2-hydroxy-4-n-octoxybenzophenone, 2-hydroxy-4-n-dodecyloxybenzophenone, 2-hydroxy-4-benzyloxybenzophenone, 2,2'-dihydroxy-4,4'-dimethoxybenzophenone, and 2-hydroxy-4-(2-hydroxy-3-methacryloxy) propoxybenzophenone. Among these examples, the benzotriazole based UV absorber is preferable.

The amount of the UV absorber to be used is preferably in a range of 0.1 to 15 parts by weight, and more preferably in a range of 0.3 to 10 parts by weight, with respect to 100 parts by weight of the conjugated diene polymer cyclized product.

Examples of the UV stabilizer include hindered-amine based UV stabilizer such as bis(2,2,6,6-tetramethyl-4-piperidyl) sebacate, 2-(3,5-di-t-butyl-4-hydroxybenzyl)-2-n-butylmalonic acid-bis(1,2,2,6,6-pentamethyl-4-piperidyl) dimethyl succinate-1-(2-hydroxyethyl), 4-hydroxy-2,2,6,6-tetramethylpiperidyl condensate, poly[[6-(1,1,3,3-tetramethylbutyl) amino-1, 3, 5-triazine-2-4-diyl] [(2,2, 6, 6-tetramethyl-4-piper idyl) imino] hexamethylene [(2,2,6,6-tetramethyl-4-piperidyl) imino]], N,N'-bis(3-aminopropyl) ethylenediamino-2,4-bis(N-butyl-N-(1,2,2,6,6-pentamethyl-4-piperidyl) amino)-6-chloro-1,3,5-triazine condensate, 1-[2-[3-(3,5-di-t-butyl-4-hydroxyphenyl) propionyloxy] ethyl]-4-[3-3,5-di-t-butyl-4-hydroxyphenyl] propionyloxy]-2,2,6,6-tetramethylpiperidine, 2-(3,5-di-t-butyl-4-hydroxybenzyl)-2-n-butylmalonic acid-bis(1,2,2,6,6-pentamethyl-4-piperidyl).

The amount of the UV stabilizer to be used is preferably in a range of 0.01 to 5 parts by weight, and more preferably in a range of 0.2 to 1 parts by weight, with respect to 100 parts by weight of the conjugated diene polymer cyclized product. When the organic particles of the present invention contain the UV absorber or the UV stabilizer as described above, the weatherproof of the organic particles is improved.

With regard to the hardener, hardener of any type may be used, as long as it can harden the conjugated diene polymer cyclized product.

Specific examples of the hardener include: sulfur (powdery sulfur, colloidal sulfur or insoluble sulfur); a sulfur-donating compound such as tetramethylthiuram disulfide; peroxide such as dicumyl peroxide.

The amount of the hardener to be used is generally in a range of 0.1 to 100 parts by weight, and preferably in a range of 0. 3 to 50 parts by weight, with respect to 100 parts by weight of the conjugated diene polymer cyclized product.

A hardener auxiliary may further be blended to the composition of the organic particles, to facilitate the function of the hardener.

Examples of the hardener auxiliary include zinc white, litharge, red lead, slaked lime, stearic acid and amines.

The amount of the hardener auxiliary to be used is generally in a range of 0.01 to 10 parts by weight, and preferably in a range of 0.1 to 5 parts by weight, with respect to 100 parts by weight of the conjugated diene polymer cyclized product.

A hardening accelerator may further be blended to the composition of the organic particles, to shorten the time required for hardening.

Examples of the hardening accelerator include guanidine hardening accelerator, thiazole hardening accelerator, sulfenamide hardening accelerator, thiramhardening accelerator, dithionate hardening accelerator and thiourea hardening accelerator.

The amount of the hardening accelerator to be used is generally in a range of 0.01 to 10 parts by weight with respect to 100 parts by weight of the conjugated diene polymer cyclized product.

The organic particles of the present invention is generally obtained by: preparing the conjugated diene polymer cyclized product or a polymer composition as a mixture of the cyclized product, a coloring agent and other additives which are optionally blended; pulverizing the cyclized product or the mixture; and effecting classification of the pulverized product.

The method of mixing the components to be blended, with the conjugated diene polymer cyclized product is not particularly restricted. Examples thereof include methods of melting and kneading by using a Banbury mixer, a kneader, a mixing roll or a single or double-screw extruder.

Examples of the pulverizing method include a method of pulverizing by using a pulverizer such as Bantam mill, Jet mill, disc mill, ball mill or colloid mill.

The temperature at the time of pulverization needs to be no higher than the glass transition temperature of the employed conjugated diene polymer cyclized product, and is preferably lower by at least 20°C than the glass transition temperature, and more preferably lower by at least 30°C than the glass transition temperature. If the temperature at the time of pulverization is too high, not only pulverization fails to proceed smoothly, but also the pulverized particles may melt and fused to each other, whereby particles having the desired particle diameter are less likely to be obtained.

It is preferable that, after the pulverization process, the product is classified to obtain particles having the desired mean particle diameter.

Examples of the method of classification include classification by wind, by centrifugation or by sieving.

The organic particles of the present invention can preferably be used as powder paint by adding a coloring agent to the composition thereof. The resulting powder paint is applicable to coating of a ship base, corrosionproof coating, waterproof coating, soilproof coating and electric insulating coating, for which a solvent-type coating has conventionally been used. Needless to say, the powder paint of the present invention is applicable to a base material to which powder paint has conventionally been applied. Further, the powder paint of the present invention is applicable to electrostatic painting and thus can be used as toner for electrophotography.

### EXAMPLES

Hereinafter, the present invention will be described in detail by following examples. "Parts" and "%" in the examples represent "parts by weight" and "% by weight", respectively, unless mentioned otherwise.

The operation or the test for each evaluation item was carried out, as follows. (Measurement of physical properties of the conjugated diene polymer cyclized product)
(1) Number average molecular weight
   Number average molecular weight is calculated as a standard polystyrene equivalent molecular weight, according to gel permeation chromatography.
(2) Softening point, pour point and pour-stop point
   Measurement is carried out by using a flow tester (CFT-500C, manufactured by Shimadzu Corporation) under the following measurement conditions, and the softening point, pour point and pour-stop point are obtained from the point of inflection.
   Fluidity can be evaluated on the basis of the difference between the pour point and the softening point. The smaller the difference, the more excellent the fluidity is. The material having high fluidity is likely to exhibit excellent surface smoothness, when used as powder paint.
   Die: 1.0mmφ×10mm; Temperature-raising rate: 6°C/minute; Load: 20 kg/cm², Amount of the sample: 1.2 g; Pellet preheating temperature: 40°C
(3) Glass transition temperature
   Glass transition temperature is measured according to the DSC method prescribed by JIS K 7121
   (Evaluation of physical properties of powder paint)
(4) Mean particle diameter
   Mean particle diameter is expressed as a particle diameter corresponding to the 50% number reference integrated value in the number reference integrated curve plotted with respect to the particle diameter and measured by using a particle size distribution analyzer of laser diffraction-scattering type (LMS-300, manufactured by SEISHIN ENTERPRISE CO., LTD.)
(5) Blocking resistance
   Powder is charged in a glass tube with bottomhaving diameter of 3 cm and height of 7 cm, such that powder is 4 cm high. The tube is left in a bath in which temperature is constantly kept at 40°C for one week. Thereafter, powder is collected by turning the glass tube over. The condition of the powder is evaluated according to the following three criteria.
   ○: No or very few aggregation is observed.
   Δ: Powder has partially been aggregated and a number of small aggregations are observed.
   x: A large aggregation is observed.
(6) Smoothness
   Apparent smoothness of the coating is visually evaluated according to the following two criteria.
   O: Irregularities of the coating are not significant and smoothness thereof is satisfactory
   ×: Irregularities of the coating are conspicuous and smoothness thereof is not satisfactory
(7) Glossiness
   Glossiness is determined according to JIS K 5400 of 60° mirror surface glossiness.
(8) Initial adhesion
   After the powder paint is applied by coating, to a base material, the coating is cut with a cutter such that each cut reaches the base material and one set of eleven cuts with 2 mm intervals therebetween and the other set of eleven cuts with 2 mm intervals therebetween, the other set of eleven cuts intersecting at right angle with the one set of eleven cuts, are formed at the coating to provide a lattice pattern constituted of 100 squares of 2 mm × 2 mm. A sticky cellophane tape is adhered to the lattice-patterned coating and the tape is peeled off, toward the operator, in the direction lifted up with respect to the lattice by 45°. The number of the squares remaining at the coating surface is counted.
(9) Adhesion when exposed to moisture

The coated plate is soaked in warm water at 40°C for 240 hours. Thereafter, the above-described lattice-pattern test is carried out and the number of the squares remaining at the coating surface is counted.

### (Synthesis example 1)

To a four-neck flask equippedwith a stirrer, a thermometer, a reflux condenser and a nitrogen-introducing tube, 100 parts of polyisoprene (isoprene unit of cis-1,4-configuration: 86%, isoprene unit of trans-1, 4-configuration: 12%, and isoprene unit of 3,4-configuration: 2%, number average molecular weight: 77,000), which polyisoprene had been cut into 10 mm × 10 mm squares, and 230 parts of toluene were charged. After the inside of the flask was fluxed with nitrogen, the flask was heated in an oil bath at 80°C and polyisoprene was dissolved in toluene with stirring. After polyisoprene was completely dissolved in toluene, 0.9 parts of p-toluenesulfonic acid was added thereto. The temperature of the solution was kept at 80°C and constantly stirred, so that a cyclization reaction occurred. After approximately 5 hours, 100 parts of ion-exchanged water was added to the reaction mixture, to stop the reaction. The mixture was left for 30 minutes so that the aqueous phase and the oil phase were separated. The oil phase was collected and washed three times, each time by 300 parts of ion-exchanged water. Thereafter, the mixture was centrifuged at 300 rpm and the oil phase was collected. The collected oil phase was heated at 130°C to remove moisture.

The obtained reaction solution was put into 1000 parts of 1% methanol solution of 2,6-di-tert-butylphenol. Precipitate was collected and dried under a reduced pressure, whereby a cyclized polymer A was obtained. The physical properties of the cyclized polymer A were measured. The results are shown in Table 1.

### (Synthesis example 2)

A cyclized polymer B was obtained in a manner similar to that of Synthesis example 1, except that polyisoprene used in Synthesis example 1 was replaced with polyisoprene composed of 73% of cis-1,4-configuration isoprene unit, 22% of trans-1, 4-configuration isoprene unit and 5% 3,4-configuration isoprene unit and having number average molecular weight of 79,000, and that 1.1 parts of p-toluenesulfonic acid was used. The physical properties of the cyclized polymer B were measured. The results are shown in Table 1.

### (Synthesis example 3)

A cyclized polymer C was obtained in a manner similar to that of Synthesis example 1, except that polyisoprene used in Synthesis example 1 was replaced with polyisoprene composed of 30% of cis-1,4-configuration isoprene unit, 14% of trans-1, 4-configuration isoprene unit, 2% of 1,2-configuration isoprene unit and 56% of 3,4-configuration isoprene unit and having number average molecular weight of 123, 000, and that 1.0 parts of p-toluenesulfonic acid was used. The physical properties of the cyclized polymer C were measured. The results are shown in Table 1.

### (Synthesis example 4)

To a four-neck flask equipped with a stirrer, a thermometer, a reflux condenser and a nitrogen-introducing tube, 100 parts of polybutadiene (isoprene unit of cis-1,4-configuration: 26%, isoprene unit of trans-1, 4-configuration: 18%, and isoprene unit of 1,2-configuration: 56%, number average molecular weight: 110,000), which polybutadiene had been cut into 10 mm × 10 mm squares, and 900 parts of toluene were charged. After the inside of the flask was fluxed with nitrogen, the flask was heated in an oil bath at 80°C and polybutadiene was dissolved in toluene with stirring. After polybutadiene was completely dissolved in toluene, 2.78 parts of benzyl chloride and 1.8 parts of ethylaluminum dichloride were added thereto. The temperature of the solution was kept at 23°C and constantly stirred so that a cyclization reaction occurred. After 12 minutes, 20 parts of methanol was added to the reaction mixture, to stop the reaction. The mixture was left for 30 minutes so that the aqueous phase and the oil phase were separated. The oil phase was collected and washed three times, each time by 300 parts of ion-exchanged water. Thereafter, the mixture was centrifuged at 300 rpm and the oil phase was collected. The collected oil phase was heated at 130°C to remove moisture.

The obtained reaction solution was put into 1000 parts of 1% methanol solution of 2,6-di-tert-butylphenol. Precipitate was collected and dried under a reduced pressure, whereby a cyclized polymer D was obtained. The physical properties of the cyclized polymer D were measured. The results are shown in Table 1.

### (Synthesis example 5)

To a four-neck flask equipped with a stirrer, a thermometer, a reflux condenser and a nitrogen-introducing tube, 100 parts of polyisoprene (isoprene unit of cis-1,4-configuration: 86%, isoprene unit of trans-1,4-configuration: 12%, and isoprene unit of 3,4-configuration: 2%, number average molecular weight: 77,000), which polyisoprene had been cut into 10 mm × 10 mm squares, and 400 parts of toluene were charged. After the inside of the flask was fluxed with nitrogen, the flask was heated in an oil bath at 80°C and polyisoprene was dissolved in toluene with stirring. After polyisoprene was completely dissolved in toluene, 0.7 parts of tin tetrachloride was added thereto. The temperature of the solution was kept at 23°C and constantly stirred, so that a cyclization reaction occurred. After 60 minutes, 20 parts of methanol was added to the reaction mixture, to stop the reaction. The mixture was left for 30 minutes, so that the aqueous phase and the oil phase were separated. The oil phase was collected and washed three times, each time by 300 parts of ion-exchanged water. Thereafter, the mixture was centrifuged at 300 rpm and the oil phase was collected. The collected oil phase was heated at 130°C to remove moisture.

The obtained reaction solution was put into 1000 parts of 1% methanol solution of 2,6-di-tert-butylphenol. Precipitate was collected and dried under a reduced pressure, whereby a cyclized polymer E was obtained. The physical properties of the cyclized polymer E were measured. The results are shown in Table 1.

### (Synthesis example 6)

A cyclization reaction was effected in a manner similar to that of Synthesis example 5, except that polyisoprene used in Synthesis example 5 was replaced with mastication natural rubber (deproteinised NR (DPNR) produced by 50-times mastication at the roll temperature of 20°C and having number average molecular weight of 68,000), and that 0.5 parts of tin tetrachloride was used.

The solution resulted from the cyclization reaction was treated in a manner similar to that of Synthesis example 1, whereby the cyclized polymer F was obtained. The physical properties of the cyclized polymer F were measured. The results are shown in Table 1.

### (Example 1)

95 parts of the cyclized polymer A and 5 parts of copper phthalocyanine based cyan pigment (Heliogen Blue S7084, manufactured by BASF Corporation) were melted and kneaded with Plast mill. Next, the resulting solid was pulverized with Jet mill, while the temperature in the mill was kept at 0°C. The resulting powder was classified according to particle sizes, by using wind, whereby powder paint of cyan color, whose mean particle diameter was 30 µm, was obtained. The blocking resistance of the powder paint was evaluated. The results are shown in Table 1.

### (Examples 2 to 6)

Powder paint samples of cyan color were obtained in a manner similar to that of Example 1, except that the cyclized polymer A was replaced with the cyclized polymers B to F, respectively. The blocking resistance of these powder paint samples were evaluated. The results are shown in Table 1.

**Table 1**

| | Examples | | | | | |
|---|---|---|---|---|---|---|
| | 1 | 2 | 3 | 4 | 5 | 6 |
| Cyclized polymer | A | B | C | D | E | F |
| Number average molecular weight (× 10000) molecular weight | 49.4 | 61.0 | 92.0 | 91.0 | 53.2 | 41.0 |
| Cyclization rate (%) | 88 | 80 | 75 | 53 | 78 | 73 |
| Glass transition temperature (°C) | 64 | 56 | 71 | 85 | 55 | 78 |
| Softening point (°C) | 77 | 72 | 85 | 94 | 72 | 87 |
| Pour point (°C) | 109 | 117 | 145 | 148 | 98 | 124 |
| pour-stop point (°C) | 151 | 163 | 192 | 197 | 140 | 167 |
| Fluidity (°C) | 32 | 45 | 60 | 54 | 26 | 37 |
| Blocking resistance of powder paint | ○ | ○ | ○ | ○ | ○ | ○ |

It is confirmed that the powder paint of the present invention exhibits excellent blocking resistance and excellent fluidity which results from relatively small difference between the pour point and the softening point.

### (Examples 7 to 9)

1000 parts of the sample selected from the group consisting of the cyclized polymers A, B and E, 3 parts of hardener (2,5-dimethyl-2,5-bis(t-butylperoxy) hexane, "Perhexa 25B-40", manufactured by NOF Corporation) , 10 parts of butylpolyacrylate based leveling agent ("Acronal 4F", manufactured by BASF Corporation), 5 parts of benzoin, and 500 parts of rutile-type titanium dioxide pigment ("TIPAQUE CR-90" manufactured by Ishihara Sangyo Kaisha, Ltd.) were dry-blended with Henshel mixer (FM10B type, manufactured by Mitsui Miike Machinery Co., Ltd.). Thereafter, the mixture was melt and kneaded at 110°C with Cokneader (PR-46 type, manufactured by Buss Co., Ltd.). Next, the kneaded material was pulverized with Jet mill, while the temperature in the mill was kept at 0°C. The resulting powder was classified according to particle sizes, by using wind, whereby powder paint whose mean particle diameter was 50 µm was obtained.

The obtained powder paint was applied by coating, to a steel plate which had been treated with zinc phosphate, such that the thickness of the coating was 80 to 100 µm. The coated powder paint was then baked under two different conditions, that is, 160°C × 20 minutes and 180°C × 20 minutes. The evaluation results of these powder paints are shown in Table 2.

**Table. 2**

| | | | | |
|---|---|---|---|---|
| | | | | |

| | | 7 8 9 | | |
|---|---|---|---|---|
| Cyclized polymer | | A B C | | |
| Baking temperature 160°C | Smoothness | O | O | O |
| | Glossiness (%) | 97 | 97 | 98 |
| | Initial adhesion | 100 | 100 | 100 |
| | Adhesion when exposed to moisture | 100 | 100 | 100 |
| Baking temperature 160°C | Smoothness | O | O | O |
| | Glossiness (%) | 98 | 97 | 98 |
| | Initial adhesion | 100 | 100 | 100 |
| | Adhesion when exposed to moisture | 100 | 100 | 100 |

It is confirmed that the powder paint samples containing the cyclized polymer A, B or E provide, whether baking is carried out at a low temperature (160°C) or at a high temperature (180°C), a coating film which is excellent in both coating appearance (smoothness) and adhesion when exposed to moisture.

### INDUSTRIAL APPLICABILITY

A conjugated diene polymer cyclized product or a derivative thereof is excellent in water resistance, waterproof, electric insulation and adhesion. Further, a conjugated diene polymer cyclized product or a derivative thereof exhibits, when melted, excellent fluidity. As the particles of the present invention contain such a conjugated diene polymer cyclized product or a derivative thereof and have particle diameter in the above-described range, the particles can be used for various applications such as powder paint.

## Claims

1. Organic particles, comprising no less than 20% by weight of a conjugated diene polymer cyclized product and having mean particle diameter in a range of 1 to 200 µm.

2. The organic particles according to claim 1, wherein cyclization rate of the conjugated diene polymer cyclized product is in a range of 30 to 95%.

3. The organic particles according to claim 1 or 2, wherein number average molecular weight of the conjugated diene polymer cyclized product is in a range of 5,000 to 100,000.

4. The organic particles according to any one of claims 1 to 3, wherein glass transition temperature of the conjugated diene polymer cyclized product is no lower than 50°C.

5. The organic particles according to any one of claims 1 to 4, wherein softening point of the conjugated diene polymer cyclized product is in a range of 70 to 100°C.

6. The organic particles according to claim 5, wherein pour point of the conjugated diene polymer cyclized product is in a range of 95 to 150°C and difference between the pour point and the softening point is in a range of 20 to 60°C.

7. The organic particles according to claim 6, wherein pour-stop point of the conjugated diene polymer cyclized product is in a range of 140 to 200°C and difference between the pour point and the pour-stop point is in a range of 30 to 50°C.

8. The organic particles according to any one of claims 1 to 7, further comprising a coloring agent.

9. The organic particles according to claim 8, comprising 0.1 to 50 parts by weight of the coloring agent with respect to 100 parts by weight of the conjugated diene polymer cyclized product.

10. Powder paint, including the organic particles according to any one of claims 1 to 7, the organic particles containing a coloring agent.

11. A polymer composition, comprising:
a conjugated diene polymer cyclized product having cyclization rate in a range of 30 to 95%, number average molecular weight in a range of 5,000 to 100,000 and glass transition temperature of no lower than 50°C; and a coloring agent.

## Patentansprüche

1. Organische Teilchen, umfassend nicht weniger als 20 Gew.-% eines cyclisierten Produkts eines konjugierten Dienpolymers und mit einem mittleren Teilchendurchmesser im Bereich von 1 bis 200 µm.

2. Organische Teilchen gemäß Anspruch 1, wobei die Cyclisierungsrate des cyclisierten Produkts eines konjugierten Dienpolymers im Bereich von 30 bis 95 % liegt.

3. Organische Teilchen gemäß Anspruch 1 oder 2, wobei das zahlenmittlere Molekulargewicht des cyclisierten Produkts eines konjugierten Dienpolymers im Bereich von 5.000 bis 100.000 liegt.

4. Organische Teilchen gemäß einem beliebigen der Ansprüche 1 bis 3, wobei die Glasübergangstemperatur des cyclisierten Produkts eines konjugierten Dienpolymers nicht weniger als 50°C beträgt.

5. Organische Teilchen nach einem beliebigen der Ansprüche 1 bis 4, wobei der Erweichungspunkt des cyclisierten Produkts eines konjugierten Dienpolymers im Bereich von 70 bis 100°C liegt.

6. Organische Teilchen nach Anspruch 5, wobei der Pourpoint des cyclisierten Produkts eines konjugierten Dienpolymers im Bereich von 95 bis 150°C liegt und der Unterschied zwischen dem Pourpoint und dem Erweichungspunkt in einem Bereich von 20 bis 60°C liegt.

7. Organische Teilchen gemäß Anspruch 6, wobei der Pour-Stopp-Point des cyclisierten Produkts eines konjugierten Dienpolymers im Bereich von 140 bis 200°C liegt und der Unterschied zwischen dem Pourpoint und dem Pour-Stopp-Point in einem Bereich von 30 bis 50°C liegt.

8. Organische Teilchen gemäß einem beliebigen der Ansprüche 1 bis 7, des Weiteren umfassend ein Färbemittel.

9. Organische Teilchen gemäß Anspruch 8, umfassend 0,1 bis 50 Gewichtsteile des Färbemittels in Bezug auf 100 Gewichtsteile des cyclisierten Produkts eines konjugierten Dienpolymers.

10. Pulveranstrichmittel, umfassend die organischen Teilchen gemäß einem beliebigen der Ansprüche 1 bis 7, wobei die organischen Teilchen ein Färbemittel enthalten.

11. Polymerzusammensetzung, umfassend:
ein cyclisiertes Produkt eines konjugierten Dienpolymers mit einem Cyclisierungsgrad im Bereich von 30 bis 95%, einem zahlenmittleren Molekulargewicht im Bereich von 5.000 bis 100.000 und einer Glasübergangstemperatur von nicht weniger als 50°C; und ein Färbemittel.

## Revendications

1. Particules organiques, comprenant pas moins de 20% en poids d'un produit cyclisé d'un polymère diène conjugué et qui possèdent un diamètre de particule moyen dans la gamme de 1 à 200 µm.

2. Particules organiques selon la revendication 1, dans laquelle le taux de cyclisation du produit cyclisé d'un polymère diène conjugué est dans la gamme de 30% à 95%.

3. Particules organiques selon la revendication 1 ou 2, dans lesquelles la masse moléculaire moyenne en nombre du produit cyclisé d'un polymère diène conjugué est dans la gamme de 5 000 à 100 000.

4. Particules organiques selon l'une quelconque des revendications 1 à 3, dans lesquelles la température de transition vitreuse du produit cyclisé d'un polymère diène conjugué n'est pas inférieure à 50°C.

5. Particules organiques selon l'une quelconque des revendications 1 à 4, dans lesquelles le point de ramollissement du produit cyclisé d'un polymère diène conjugué est dans la gamme de 70°C à 100°C.

6. Particules organiques selon la revendication 5, dans laquelle le point d'écoulement du produit cyclisé d'un polymère diène conjugué est dans la gamme de 95°C à 150°C et la différence entre le point d'écoulement et le point de ramollissement est dans la gamme de 20°C à 60°C.

7. Particules organiques selon la revendication 6, dans laquelle le point d'arrêt d'écoulement du produit cyclisé d'un polymère diène conjugué est dans la gamme de 140°C à 200°C et la différence entre le point d'écoulement et le point d'arrêt d'écoulement est dans la gamme de 30°C à 50°C.

8. Particules organiques selon l'une quelconque des revendications 1 à 7, comprenant en outre un agent colorant.

9. Particules organiques selon la revendication 8, comprenant 0,1 à 50 parties en poids de l'agent colorant par rapport à 100 parties en poids du produit cyclisé d'un polymère diène conjugué.

10. Peinture en poudre, incluant les particules organiques selon l'une quelconque des revendications 1 à 7, les particules organiques contenant un agent colorant.

11. Composition polymère, comprenant:
un produit cyclisé d'un polymère diène conjugué qui possède un taux de cyclisation dans la gamme de 30% à 95%, une masse moléculaire moyenne en nombre dans la gamme de 5 000 à 100 000 et une température de transition vitreuse pas inférieure à 50°C ; et un agent colorant.
